# EUROPEAN PATENT APPLICATION

(11) **EP 4 738 773 A1**
(43) Date of publication of application: **06.05.2026**
(21) Application number: 24209585.9
(22) Date of filing: 29.10.2024
(51) Int. Cl.: H04L 41/0226, H04L 41/022, H04L 41/084, H04L 41/08, H04L 41/16

(54) **TECHNIQUES TO OPERATE BASE STATIONS**

(71) Applicant: Deutsche Telekom AG, 53113 Bonn (DE)
(72) Inventor: Papastergiou, Konstantinos, 46483 Wesel (DE); Koch, Karl, 63150 Heusenstamm (DE); Fiedler, Marc, 64653 Lorsch (DE)
(74) Representative: karo IP

(57) **Abstract**

A method for manufacturer-independent configuration of a base station (BTS) in a mobile network, comprising the steps of:
• Receiving network specifications in the form of NBX data,
• Processing the NBX data by a Cognitive Model Configurator (KMK) module,
• Generating manufacturer-specific SBX data by the KMK module using a trained artificial intelligence,
• Transmitting the SBX data via an SBI interface to the BTS for configuration and control.

## Description

The present invention relates to a control system for manufacturer-independent control and configuration of base stations (BTS) in mobile networks. The control system enables operators to control and monitor BTS across different manufacturers, improving flexibility and network security.

The national mobile network of German mobile operators consists to a significant extent of base stations from various manufacturers, where the base stations can currently only be operated using a proprietary (closed-source) Element Manager (EM) provided by the manufacturer. As a result, security risks, data security issues, and/or functional problems can arise for the network operator if the Element Manager is prompted to make uncontrolled changes to the base station.

Third system have so far been very limited to interact with the BTS without using the Element Manager (EM).

Using this proprietary protocol, so-called man-machine language (MML) commands are sent to the BTS to trigger actions (software updates, resets, etc.) and configure the BTS.

An operational state (B) of a BTS is defined by several hundred parameter values in a data model (D). To transition the BTS from a current operational state (BA) to a valid operational state (BB), extensive knowledge of the valid operational states and the necessary actions (configuration, commands) is required, taking into account the various BTS types.

In current technology, base stations in mobile networks are typically controlled using manufacturer-specific Element Managers (EM). These EMs utilize proprietary protocols and configuration data, which restricts network operators from managing base stations in a cross-manufacturer and independent manner. This dependence on proprietary systems limits operational flexibility and introduces potential security risks, as manufacturer-specific vulnerabilities or proprietary accesses may not be fully under the operator's control.

The problem with existing systems is that network operators are tied to manufacturer-specific Element Managers, leading to a lack of flexibility and increased security risks.

Hence, it is the task of the invention to provide techniques that enable independent control of base stations from various manufacturers without relying on proprietary EMs.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a Cognitive Model Configurator (KMK) module is configured to transform network specifications in the form of NBX data into manufacturer-specific SBX data using artificial intelligence (AI) specifically trained for the respective base station (BTS), wherein the SBX data is suitable for operating the respective BTS of a manufacturer.

Term Cognitive Model Configurator module can be abbreviated as KMK module (where KMK stands for Kognitive Model Konfigurator). This abbreviation is based on the initial letters of the key words in the term. It can also be referred to simply as CMC module (Cognitive Model Configurator) if its English origin shall be emphasized.

The technical effect of this invention is that the KMK module, through the use of AI, can generate manufacturer-specific SBX data independently of proprietary EMs, enabling independence from specific manufacturers. The advantage lies in the flexibility to control BTS from different manufacturers using a centralized system, thereby minimizing security risks associated with proprietary systems.

In one embodiment, the artificial intelligence of the KMK module is trained using reinforcement learning models (RLM), where historical NBX and SBX data from previous configuration data are used to generate SBX data.

As those SBX are generated very frequently based on NBX data by the respective element manager, there is already a sufficiently large databases to cover various situations and use cases that is necessary to efficiently train the artificial intelligence. Hence, SBX data is especially well suited for this use case. It is a further technical effect of this embodiment that this enables a continuous improvement of SBX data generation through machine learning. Actually, it is also possible to validate SBX data generated by the trained artificial intelligence with the corresponding SBX data generated by the element manager to improve the model of the artificial intelligence. The advantage is that the system can generate increasingly precise and optimized configuration data over time, leading to more efficient and reliable BTS operation.

Each day, several thousand configuration changes have been and are being carried out. Accordingly, the Reinforcement Machine Learning Model (RMLM) is trained using the available NBX and SBX configuration data from past configuration changes. Additionally, the shared data can be marked as valid operational data, and it is possible to specify their purpose during the training phase, so that the artificial intelligence learns how to generate SBX configuration data when the user simply indicates the purpose for which they should be created. One such purpose could be, for example, continuously optimizing the energy consumption of a base station using "conventionally" generated configuration files from the manufacturer's Element Manager (EM).

This offers the particular advantage that, due to the vast number of possible configuration states, artificial intelligence is particularly well-suited to efficiently generate the corresponding SBX configuration data. The SBX configuration files can then be directly transmitted to the base station via an appropriate SBI interface of the RAN controller (RC).

In one embodiment, the KMK module is configured to perform security-relevant checks on the generated SBX data and/or verify their compliance with security policies and/or operational policy requirements of the mobile network operator.

The technical effect of this embodiment is that the system actively checks for compliance with security guidelines before applying configuration data to the BTS. This increases network security and prevents potentially harmful configurations from being implemented on the BTS.

According to a second aspect of the invention, a RAN controller (RC) for controlling and/or configuring base stations (BTS) in a mobile network is disclosed. The RC comprises a KMK module as described above, as well as an SBI interface that is configured to transmit commands and manufacturer-specific SBX data to the BTS and/or receive feedback from the BTS, wherein the RAN controller is configured to transmit manufacturer-specific SBX data to the BTS via the SBI interface for configuration and control of the BTS.

The technical effect of this is a seamless communication between the RAN controller and the BTS via the SBI interface. The advantage is that the BTS can be operated independently of the manufacturer's Element Manager, enabling cross-manufacturer control.

In an embodiment, the RAN controller further comprises a REST interface for communication with at least one Network Management System (NMS), where the NMS transmits configurable operational data for controlling and monitoring the BTS to the RAN controller via the REST interface.

The technical effect is that the RAN controller can receive operational data from the NMS, enabling real-time monitoring and configuration. The advantage is that operators have greater control over BTS operation and can make adjustments based on network conditions.

A Network Management System (NMS) in a mobile communication system provides several essential functionalities. One key functionality is fault management, which involves detecting, isolating, and resolving network issues. The NMS continuously monitors network components, such as base stations, for potential faults, like hardware failures or communication breakdowns. It generates alerts and alarms in real-time, allowing operators to quickly address problems and minimize downtime.

Another important functionality is performance management, which focuses on collecting and analyzing data to monitor the overall health and efficiency of network elements. The NMS gathers key performance indicators (KPIs) like signal strength, data throughput, and latency. By analyzing this data, network operators can identify performance issues, predict potential future problems, and optimize the allocation of resources.

Configuration management is crucial for controlling and updating the settings and parameters of network components. The NMS ensures that base stations and other elements are properly configured and operate efficiently. This includes managing software updates, adjusting radio frequencies, and implementing new policies, all of which can be done remotely to streamline operations and reduce manual intervention.

In one embodiment, the RAN controller further comprises an interface for communication with a manufacturer's Element Manager, wherein the Element Manager is used to validate the SBX data generated by the KMK module without exerting direct control over the BTS.

The technical effect is that the Element Manager can assist in validating the SBX data generated by the KMK module, ensuring that manufacturer-specific requirements are met without compromising the independence of the BTS. The advantage is that the validation ensures compatibility while maintaining operator control.

In one embodiment, the RAN controller is configured to modify the manufacturer-specific SBX data transmitted to the BTS based on validation results provided by the manufacturer's Element Manager.

The technical effect is that the RAN controller can dynamically adjust SBX data based on feedback from the manufacturer's Element Manager, ensuring accurate configuration. The advantage is that configuration updates are performed with a high degree of precision, reducing the risk of errors only by the entity that is under total control of the mobile provider.

In one embodiment, the RAN controller includes multiple artificial intelligences, each trained for different types of BTS to generate SBX data for various BTS from different manufacturers.

The technical effect is that the RAN controller can handle multiple types of BTS simultaneously, adapting to the specific requirements of each. The advantage is that the system can manage a heterogeneous network of BTS from different manufacturers, reducing complexity for the operator. Putting all the information of different types of BTS would not work. If one has already an trained artificial intelligence that already works with certain type of BTS, training that model with another type of BTS would deteriorate this already trained artificial intelligence as the generation of the SBX data of two different manufacturers is not necessarily compatible.

According to a third aspect of the invention, a control system of a mobile network operator for operating a base station (BTS) is disclosed. The control system comprises
- at least one base station (BTS) configured to provide mobile services and communicate with the RAN controller via an SBI interface to receive manufacturer-specific SBX data and commands,
- a Network Management System (NMS) configured to monitor and/or control the operation of the BTS, where the NMS is connected to the RAN controller via a interface, in particular a REST interface, and transmits configurable operational data for controlling and monitoring the BTS to the RAN controller,
- a RAN controller according to any of claims 4 to 8, wherein the RAN controller is configured to:
   ∘ generate manufacturer-specific SBX data and transmit them to the BTS via the SBI interface,
   ∘ receive operational data from the NMS via the interface, in particular a REST interface,
   ∘ modify the SBX data based on the operational data provided by the NMS, wherein the RAN controller, the NMS, and the BTS are communicatively connected to ensure that the BTS is controlled based on the data provided by the NMS, and the RAN controller manages the operational states of the BTS by receiving and processing NBX data and generating SBX data.

The technical effect of this system is the integration of BTS, NMS, and RAN controllers into a unified network that can independently control BTS from various manufacturers. The advantage is that operators can manage a multi-vendor network with greater flexibility and security. The RAN controller (RC) is arranged in front of the BTS in such a way, in terms of communication, that the RC forms the only device with a data interface for operating the BTS. Therefore, the BTS can no longer receive data directly from the manufacturer's Element Manager.

In one embodiment, the control system further comprises a manufacturer's Element Manager to assist the RAN controller in validating SBX data.

The technical effect is that the Element Manager can help validate the SBX data without directly controlling the BTS. The advantage is that compatibility with manufacturer-specific requirements is maintained without compromising the operator's independence. It is of a further advantage that the NMS can use the (unified) REST-interface of the RC instead of different interfaces of different element managers of different manufacturers.

According to a fourth aspect of the invention, a method for manufacturer-independent configuration of a base station (BTS) in a mobile network is disclosed that comprises the steps of receiving network specifications in the form of NBX data, processing the NBX data by a Cognitive Model Configurator (KMK) module, generating manufacturer-specific SBX data by the KMK module using artificial intelligence, and transmitting the SBX data via an SBI interface to the BTS for configuration and control.

The technical effect of the method is the manufacturer-independent generation and transmission of SBX data to the BTS. The advantage is that network operators can configure and control BTS from various manufacturers using a single, unified process.

In one embodiment, the method further comprises the step of transmitting configuration data from a Network Management System (NMS) or from multiple NMS systems to the RAN controller via a REST interface, where the RAN controller is configured to transform the transmitted configuration data into SBX data for the BTS.

The technical effect is that the method supports multi-vendor network environments where multiple NMS systems can provide configuration data to a single RAN controller. The advantage is that the system is scalable and can handle complex network configurations.

In one embodiment, the method further comprises the step of the NMS operating or controlling the BTS by transmitting configurable operational data to the BTS via the RAN controller.

The technical effect is that the NMS can dynamically manage the BTS through the RAN controller. The advantage is that operators can respond to changing network conditions in real-time.

In one embodiment, the method further comprises the step of simultaneously configuring multiple BTS by the RAN controller, where each BTS is configured with specific SBX data generated by different artificial intelligences trained for the respective BTS.

The technical effect is that the method enables simultaneous configuration of multiple BTS from different manufacturers. The advantage is that operators can manage large networks with minimal complexity.

In one embodiment, the method further comprises the step of storing a previous operational state of the BTS, allowing the configuration to be rolled back to a previous state if necessary.

The technical effect is that the system can revert to a previous configuration in case of errors or issues. The advantage is that it provides a safety mechanism, ensuring network stability and minimizing downtime.

In the following, preferred implementation examples of the present invention are explained with reference to the accompanying figure:
- Fig. 1:: shows a control system according to the invention;
- Fig. 2:: illustrates an inventive RAN controller (RC);
- Fig. 3:: illustrates a communication flow of an inventive method for configuring and managing base stations (BTS) in a mobile network;
- Fig. 4: illustrates a data communication architecture of the RAN controller;

In the following, numerous features and further embodiments of the present invention are explained in detail by means of preferred embodiments. The present disclosure is not limited to the specifically named combinations of features. Rather, the features mentioned here can be combined arbitrarily into inventive embodiments, unless this is expressly excluded below.

The invention thus offers the advantage of operating a BTS located in the access network of a specific manufacturer solely by the network operator, in particular by the mobile service provider. The operation includes configuration, software updates, and/or monitoring. During a transitional period, it must be ensured that the activities of the Element Manager (EM) are monitored and, if necessary, harmful configurations are detected. In one embodiment, the RAN controller (RC) acts as a kind of abstraction layer between network elements, such as Network Management Systems (NMS), and the BTS. The RC effectively decouples the BTS from the manufacturers' Element Managers (EMs).

The RAN controller (RC) can include one or more management modules that provide several key management functions. These functions include configuration management, which applies both to the initial setup of the system and in cases where hardware needs to be replaced or changes in the operating mode are required. Additionally, the RC handles the management of software updates and enables the monitoring of manufacturer-specific base stations (BTS) through manufacturer-neutral REST services.

In one embodiment, the SBX files generated by the Cognitive Model Configurator (KMK) module can be validated by using the manufacturer's own Element Manager (EM). For this validation process, both existing interfaces and any additional interfaces that have been jointly specified with the manufacturer can be utilized to connect to the EM.

Once the SBX files generated by the KMK module are received, the manufacturer's EM can provide feedback on their validity. This feedback may indicate that the configuration is valid, that the configuration is valid but with warnings that should be taken into account, or that the configuration is not valid. It is important to note that the EM itself does not generate SBX files but simply provides information that the KMK module can use to adjust the SBX files as needed.

The KMK preferably interacts with the Policy Engine of the RC, where the Policy Engine is set up to ensure compliance with specific rules of the mobile network operators and/or security criteria. For example, if the generated SBX files are considered security-critical, their transmission to the base station will be blocked. The Policy Engine can be based on fixed rules and/or a correspondingly trained artificial intelligence. For instance, the Policy Engine can be trained to detect security-critical SBX data using labeled datasets as follows: one dataset with SBX data is labeled as security-critical, and another dataset with SBX data is labeled as safe from a security perspective. The artificial intelligence can then generate a probability value that indicates whether the SBX dataset under analysis is security-critical or not. If the probability exceeds a pre-defined threshold, the SBX data is not transmitted to the base station.

Furthermore, a security-relevant classification of configurations can be performed based on the machine learning model in the KMK and/or through the Policy Engine. This classification is based on factors such as frequency, rarity, risk, operating modes, location, time, number of BTS, and other parameters. This ensures that harmful configurations are not introduced into the BTS network through the EM without detection at any point in the future.

A BulkCM Handling Module preferably determines, with the help of the Policy and Process Engine, the SBI controller responsible for a specific BTS, as well as the appropriate artificial intelligence of the KMK module for a particular BTS. Both pieces of information can be stored in the inventory management system and trigger the generation of new SBX configuration parameters as well as the necessary set of command instructions in the KMK to transfer the BTS into a new, modified, or optimized operational state (BB). The scalable process execution enabled by the Process Engine allows for parallel execution for a large number of BTS. Both the execution and evaluation of the execution results are preferably performed separately for each BTS. The configurations of multiple BTS can be grouped into a single transaction and executed together. The transaction is identified by a unique transaction ID.

Before applying a new configuration to a BTS, the RC automatically creates and stores a backup of the current operational state (B)/configuration in the RC. This allows group configurations to be rolled back by the clients simply by referencing the transaction ID, if necessary.

The SBI controller includes an SBI Session Management Module, an SBI Protocol Handler, and/or an Upstream Notification Handling Module. The SBI controller implements manufacturer-specific network and protocol communication within an independent session management framework. This approach decouples the client session from the BTS session. Some commands (K) from the BTS may return multi-part data spread over several responses. These parts can be merged to obtain the complete response.

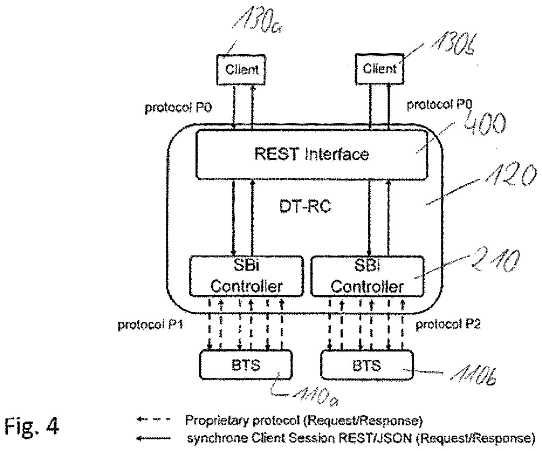

The advantage of the RC lies in the fact that it supports both asynchronous and synchronous modes, as shown in Figure 4.

In asynchronous mode, partial responses are forwarded 1:1 to the client. In synchronous mode, for some commands, the SBI controller collects/caches the partial responses from the BTS and assembles them before sending the complete response to the requesting client. For other commands, the SBI controller acknowledges the execution to the requesting client and takes over further execution and communication with the BTS to monitor/complete the process. Examples include software updates and log file uploads, where the SBI controller is independently informed of the incremental progress of the operation by the BTS. This allows the use of less complex, synchronous clients.

Multiple SBI controllers for different manufacturer-specific protocols can be integrated into the RC. A pre-configured mapping table of SBI controllers to BTS device types is used to determine the appropriate SBI controller when a BTS is imported into the RC's inventory, and it is assigned to the BTS entry in the inventory table. At runtime, the RC automatically determines which SBI controller implementation can be used to communicate with a BTS. Additionally, the SBI controller includes a monitoring function designed to detect and handle events and failures of the elements accordingly.

Possible Modifications: The integration of the SBI controller in the DTRC is done through a modular service framework, which can simultaneously support multiple individual SBI controller modules to account for BTS from different manufacturers and communication protocols, specific features of different BTS software versions regarding authentication methods, network protocols, command sets, and/or different data model variants in the BTS. The KMK can be further developed to generate a complete SBX configuration for the initial commissioning of a newly deployed BTS.

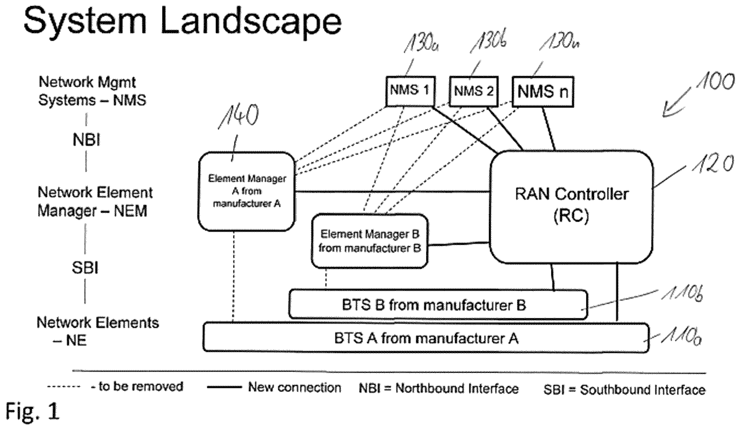

Fig. 1 illustrates the overall architecture of a manufacturer-independent control system 100 for controlling and configuring base stations (BTS) 110a,b in a mobile network of a mobile network provider. At the center of this architecture is a RAN controller 120, which plays a crucial role in managing BTS 11 0a,b from various manufacturers. The figure demonstrates how the RAN controller 120 interacts with other key components, such as the Cognitive Model Configurator (KMK) module 200 (which can be part of the RC), Network Management Systems 130a,b,n (NMS), and a manufacturer's Element Manager 140.

The RAN controller 120 is responsible for processing network specifications (NBX data) and transforming them into manufacturer-specific SBX data. These SBX data sets are then transmitted to the BTS 110a, b for configuration and/or operation. This transformation process is facilitated by the KMK module 200, which utilizes artificial intelligence (AI) trained on specific BTS data from different manufacturers. The KMK module 200 ensures that the SBX data generated is customized to suit the operational requirements of each BTS type, regardless of the manufacturer.

As illustrated in Fig. 1, the RAN controller 120 communicates with the BTS through an SBI interface 210. This interface is used to send configuration commands and SBX data to the BTS 110, allowing it to be configured according to the operator's requirements. Additionally, the SBI interface 210 allows the RAN controller to receive feedback from the BTS, enabling real-time monitoring and control.

The NMS 130 can transmit operational data to the RAN controller 120 via a REST interface 400, allowing the controller to manage BTS based on current network conditions. The REST interface facilitates communication between the NMS and the RAN controller, enabling efficient monitoring and control. The NMS can either manage a single BTS or multiple BTS, depending on the network configuration.

Another element in the architecture is the manufacturer's Element Manager 140. The RAN controller 120 communicates with the Element Manager 140 for validating SBX data generated by the KMK module 200. While the Element Manager 140 assists in ensuring compatibility with manufacturer-specific standards, it does not exert direct control over the BTS 110. This validation process ensures that any SBX data applied to the BTS is compliant with the necessary operational and security requirements, providing additional layers of assurance.

One of the significant advantages of this architecture is the independence from manufacturer-specific systems. Traditionally, BTS are managed by proprietary Element Managers that are unique to each manufacturer. However, the control system 100 depicted in Fig. 1 eliminates this dependency by allowing the RAN controller, in conjunction with the KMK module, to configure and control BTS from various manufacturers using standardized processes. This independence allows network operators to manage multi-vendor networks without being restricted by proprietary control systems.

Another key advantage is enhanced network security. By incorporating the KMK module's AI capabilities and performing security checks on the generated SBX data, the system ensures that only safe and compliant configuration data is applied to the BTS 110. Additionally, the feedback mechanisms provided by the SBI interface enable real-time monitoring, allowing the operator to detect and mitigate issues before they escalate.

Overall, Fig. 1 highlights the flexibility, scalability, and security benefits offered by the invention. It provides a unified control solution for managing diverse BTS in a manufacturer-independent manner, improving operational efficiency and reducing costs.

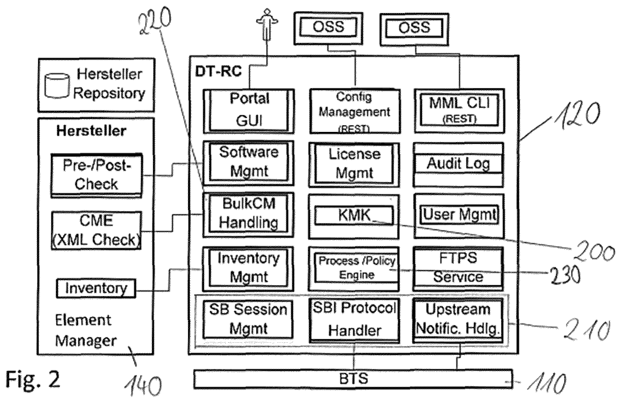

Figure 2 illustrates the detailed architecture of the RAN controller within a manufacturer-independent system 100 for managing and/or configuring base stations (BTS) 110 in a mobile network. This architecture focuses on the interaction between the core modules, highlighting the functionality of the Cognitive Model Configurator (KMK) module, the BulkCM Handling Module, the Policy Engine, and their external interfaces.

At the center of the RAN controller 120 is the Cognitive Model Configurator (KMK) module 200, which is responsible for transforming network specifications (NBX data) into manufacturer-specific SBX data. The KMK module leverages artificial intelligence (AI) that is specifically trained for different BTS models from various manufacturers. The AI uses historical data to generate optimized SBX data, ensuring accurate and efficient configuration of the BTS.

In addition to the KMK module, two other beneficial modules are shown: the BulkCM Handling Module 220 and the Policy Engine 230.

The BulkCM Handling Module 220 is responsible for managing bulk configuration changes across multiple BTS 110. This module allows the RAN controller to handle large-scale configuration tasks efficiently, especially in networks with many BTS units that require simultaneous updates or adjustments. The BulkCM Handling Module coordinates the distribution of SBX data and configuration commands to multiple BTS, ensuring that changes are applied consistently and accurately across the network.

The module works closely with the Policy Engine 230 and the KMK module 200 to ensure that configuration changes are validated before being transmitted to the BTS. The BulkCM Handling Module also supports rollback functionality, allowing network operators to revert BTS to previous configurations if needed, providing a failsafe in case of configuration errors or network issues.

The Policy Engine 230 plays a vital role in ensuring that the configuration data generated and applied to the BTS complies with the operator's security policies and operational guidelines. Before the SBX data is transmitted to the BTS, the Policy Engine performs a thorough validation process to ensure that all configuration changes meet the required security criteria and network policies.

The Policy Engine 230 can be integrated within the KMK module 200 or communicate with the KMK module 200 for that purpose, continuously checking the SBX data generated by the AI models for compliance and/or security. It also enforces operational rules, ensuring that the configurations adhere to predefined thresholds and parameters set by the network operator. For example, the Policy Engine might block configurations that pose a security risk or fall outside acceptable operational boundaries.

The technical effect of the Policy Engine is that it acts as a gatekeeper for network configuration changes, ensuring that all modifications are safe and compliant with security policies before being applied to the BTS. This enhances the security and stability of the network by preventing potentially harmful configurations from being deployed.

### Interaction with Other Components

The RAN controller interfaces with three key external systems: the BTS 110, the Network Management System (NMS) 130, and/or the manufacturer's Element Manage 140r.
1. BTS Communication via the SBI Interface 210:
   The SBI (Southbound Interface) is the communication link between the RAN controller and the BTS. The SBI interface transmits SBX data and control commands to the BTS, while also receiving feedback from the BTS for real-time monitoring and control. The integration of the BulkCM Handling Module allows for the simultaneous management of multiple BTS through the SBI interface, streamlining large-scale network updates.
2. NMS Communication via a REST Interface 400:
   The RAN controller communicates with the Network Management System (NMS) via the REST interface 400, through which operational data and network conditions are transmitted. The NMS can provide real-time performance and traffic data, which the RAN controller uses to optimize BTS configurations. The BulkCM Handling Module works in conjunction with the NMS to efficiently distribute configuration changes across multiple BTS based on network-wide performance metrics.
3. Validation by the Manufacturer's Element Manager:
   The manufacturer's Element Manager is involved in the validation of SBX data before it is transmitted to the BTS. While the RAN controller operates independently of proprietary systems, the Element Manager ensures that the SBX data meets manufacturer-specific standards. The validation process helps maintain compatibility with the manufacturer's specifications, without ceding control over the BTS to the Element Manager.

The system illustrated in Figure 2 offers significant advantages in terms of scalability, flexibility, and security. The BulkCM Handling Module allows for the efficient management of bulk configuration tasks, reducing operational complexity when managing a large network of BTS. Operators can push updates across multiple BTS simultaneously, ensuring consistency and minimizing the time required for network reconfiguration.

The Policy Engine ensures that all configurations adhere to the network operator's security policies, reducing the risk of deploying unsafe or noncompliant configurations. By enforcing these policies at the RAN controller level, operators can ensure that the entire network remains secure, even when handling configurations from multiple manufacturers.

Finally, the use of the KMK module's AI enables continuous improvement in the generation of SBX data, leading to more precise and optimized configurations over time. The integration of AI allows the RAN controller to adapt to the unique requirements of each BTS, providing tailored solutions while maintaining independence from manufacturer-specific systems.

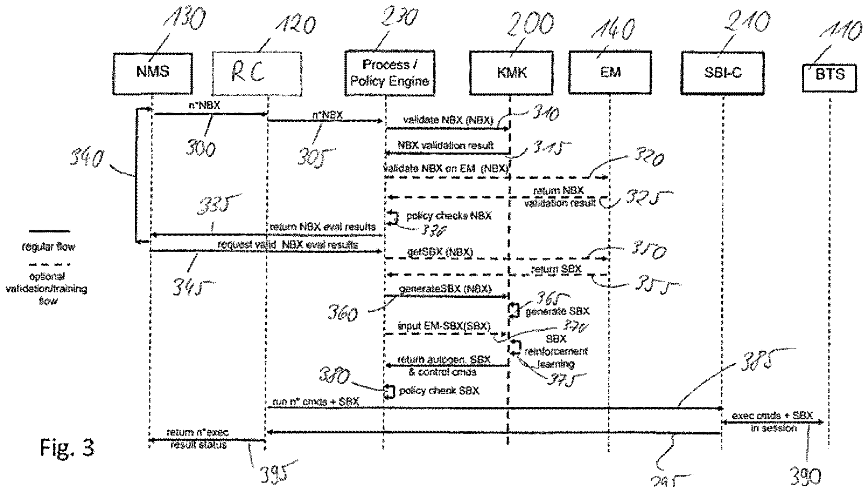

Fig. 3 illustrates a communication flow of a method for configuring and managing base stations (BTS) in a mobile network. The communication is broken down into a series of sequential steps, each representing a specific action taken by the control system 100. The steps detail the interactions between the RAN controller 120, the Network Management System 130 (NMS), the BTS 110, and the manufacturer's Element Manager 140.

In step 300, the NMS 130 transmits operational data NBX to the RAN controller via a REST interface. This operational data can include information about network conditions such as traffic loads, performance metrics, and configuration requirements. The NMS monitors the performance of the entire network and provides real-time updates to the RAN controller, enabling the controller to respond dynamically to changing network conditions.

In step 305, the RAN controller receives the operational data from the NMS. Upon receiving this data, the RAN controller begins the process of analyzing by means of the process engine 230 that can send a validation NBX request to the KMK-module 200 in step 310.

In step 315, the KMK module 200 returns the validation results.

Optionally, in step 320, process engine 230 can send a validation NBX request to the EM 140 and receive the corresponding validation result in step 325.

In step 330, the policy engine 230 can additionally check the operational NBX with respect to policy requirements and in step 335, the result of the evaluated NBX dataset can be returned to the NMS 130.

If the validation of the NBX dataset was not successful, the NMS 130 can generate a new NBX data set and start again with step 300. If the validation of the NBX dataset was successful, the NMS 130 can request the creation of the SBX based on the valid NBX data in step 345 by sending the valid NBX to the RC 120, in particular to the policy engine 230.

Optional step 350: the policy engine 200 and sends a getSBX(NBX) request to the element manager 140 that returns EM-generated SBX values in optional step 355.

In step 360, the policy engine 200 and sends a getSBX(NBX) request to the KMK module 200 that generates KMK-module-generated SBX values in step 360. The Cognitive Model Configurator (KMK) module within the RAN controller processes the operational data and generates manufacturer-specific SBX data. The KMK module uses artificial intelligence (AI), trained on historical NBX and SBX data, to create optimized configurations tailored to the specific BTS being managed. The generation of SBX data ensures that the configuration settings for each BTS meet the operational requirements determined by the NMS.

In optional step 370, the EM-generated SBX can be used to train the artificial intelligence in optional step 375 by means of reinforced learning.

In step 380, the Policy Engine within the RAN controller validates the SBX data generated by the KMK module. The Policy Engine checks whether the configurations comply with the network operator's security guidelines and operational policies. If any of the SBX data does not meet these standards, the Policy Engine prevents it from being applied to the BTS. This validation step ensures that only secure and compliant configurations are sent to the BTS, reducing the risk of network vulnerabilities or performance issues.

In step 385, the validated SBX data is transmitted to the BTS 110 via the SBI 210. The SBI interface handles the transmission of configuration commands and SBX data from the RAN controller to the BTS in step 390. This step ensures that the BTS is configured according to the operational requirements set by the NMS and processed by the KMK module. The BTS applies the received SBX data and updates its operational parameters accordingly. Once the new configuration has been applied, the BTS sends in step 395 feedback to the RAN controller through the SBI interface. This feedback includes status updates, performance metrics, and any error reports related to the configuration process. The RC forwards this feedback to the NMS 130. The NMS 130 can monitor the performance of the BTS after the configuration has been applied. The NMS collects ongoing performance metrics and operational data from the BTS, which are then used in future configuration cycles. This constant monitoring ensures that the network remains responsive to changes in demand, traffic loads, and other operational factors, allowing for real-time optimizations and adjustments by the RAN controller.

Fig. 4 illustrates the data communication architecture of the RAN controller 120 in a mobile network, focusing on the elements that are depicted in the figure. The figure highlights the communication interfaces used by the RAN controller to interact with the network components, namely the BTS 110 and the NMS 130.

### Key Elements and Communication Interfaces in Fig. 4

The RC 120 is the central element in Figure 4. It is responsible for managing and configuring the BTS 110 by processing network data and controlling the flow of communication between the BTS 110 and other network elements. The RC 120 is equipped with multiple communication interfaces to send and receive data from the BTS and NMS.

The SBI interface 210 connects the RC 120 to the BTS 110. This SBI interface is used to transmit configuration data and commands from the RAN controller to the BTS 110. The communication flow is bi-directional, meaning that in addition to sending configuration commands, the SBI interface also allows the BTS to send operational feedback back to the RAN controller. This feedback includes status updates, performance metrics, and potential error reports, enabling real-time monitoring and control of the BTS by the RAN controller.

In Fig. 4, the SBI interface is shown directly linking the RAN controller to the BTS, facilitating direct communication and ensuring that the RAN controller can continuously adjust the configuration of the BTS based on real-time data.

A REST 400 (Representational State Transfer) interface connects the RC 120 to the NMS 130. Through this interface, the NMS 130 sends operational data such as network conditions, traffic loads, and configuration requests to the RAN controller. The REST 400 interface ensures a flexible, efficient, and scalable communication stream between the NMS and the RAN controller.

In return, the RC 120 processes the data received from the NMS and can transmit responses back, updating the NMS on the status of the configuration changes and the current state of the BTS. This continuous flow of data helps maintain the network's overall performance by ensuring that the NMS is constantly informed of the BTS status and network conditions.

In Figure 4, the BTS 110 is shown as the end-point receiving configuration data from the RAN controller 120 through the SBI interface. The BTS applies the configuration settings provided by the RAN controller 120 and subsequently sends feedback on its operational state. This feedback is vital for ensuring that the configurations applied by the RAN controller are functioning as expected and allows for real-time adjustments if necessary.

The communication between the BTS 110 and the RC 120 is essential for ensuring that the BTS 110 operates in line with network performance requirements. The BTS 110 is depicted as a managed entity that relies on the RC 120 for its configuration and monitoring.

The NMS 130 is responsible for overseeing the performance and operation of the entire network. In Fig. 4, the NMS 130 communicates with the RAN controller through the REST interface. It sends performance data, operational conditions, and configuration requests to the RAN controller. The NMS monitors the network holistically and provides the RAN controller with the necessary data to optimize BTS configurations in real time.

The NMS and RAN controller work together to ensure that the network adapts to changing conditions, traffic patterns, and performance metrics. This collaboration allows the RAN controller to dynamically adjust BTS configurations to improve efficiency and network stability.

## Claims

1. A Cognitive Model Configurator module (200), KMK module, configured to transform network specifications in the form of NBX data into manufacturer-specific SBX data using artificial intelligence, AI, specifically trained for the respective base station, BTS, wherein the SBX data is suitable for operating the respective BTS of a manufacturer.

2. The KMK module according to claim 1, wherein the artificial intelligence of the KMK module is trained using reinforcement learning models, where historical NBX and SBX data from previous configuration data are used to generate SBX data.

3. The KMK module according to claim 1 or 2, wherein the KMK module is configured to perform security-relevant checks on the generated SBX data and/or verify their compliance with security policies and/or operational policy requirements of the mobile network operator.

4. A RAN controller for controlling and/or configuring base stations (BTS) in a mobile network, comprising:
• a KMK module (200) according to any of the preceding claims,
• a SBI interface (210) configured to transmit commands and manufacturer-specific SBX data to the BTS and/or receive feedback from the BTS,
• wherein the RAN controller (120) is configured to transmit manufacturer-specific SBX data to the BTS for configuration and control of the BTS via the SBI interface (210).

5. The RAN controller according to claim 4, further comprising a REST interface (400) for communication with at least one Network Management System (NMS), where the NMS transmits configurable operational data for controlling and monitoring the BTS to the RAN controller via the REST interface.

6. The RAN controller according to claim 4 or 5, further comprising an interface for communication with a manufacturer's Element Manager, wherein the Element Manager is used to validate the SBX data generated by the KMK module without exerting direct control over the BTS.

7. The RAN controller according to any of claims 4 to 6, wherein the RAN controller is configured to modify the manufacturer-specific SBX data transmitted to the BTS based on validation results provided by the manufacturer's Element Manager.

8. The RAN controller according to any of claims 4 to 7, wherein the RAN controller includes multiple artificial intelligences, each trained for different types of BTS to generate SBX data for various BTS from different manufacturers.

9. A control system (100) of a mobile network operator for operating a base station BTS, comprising:
• at least one BTS (110) configured to provide mobile services and communicate with the RAN controller via an SBI interface to receive manufacturer-specific SBX data and commands,
• a Network Management System (130), NMS, configured to monitor and/or control the operation of the BTS, where the NMS is connected to the RAN controller via a interface and transmits configurable operational data for controlling and monitoring the BTS to the RAN controller,
• a RAN controller according to any of claims 4 to 8, wherein the RAN controller is configured to:
∘ generate manufacturer-specific SBX data and transmit them to the BTS via the SBI interface,
∘ receive operational data from the NMS via the interface,
∘ modify the SBX data based on the operational data provided by the NMS, wherein the RAN controller, the NMS, and the BTS are communicatively connected to ensure that the BTS is controlled based on the data provided by the NMS, and the RAN controller manages the operational states of the BTS by receiving and processing NBX data and generating SBX data.

10. The control system according to claim 9, further comprising a manufacturer's Element Manager to assist the RAN controller in validating SBX data.

11. A method for manufacturer-independent configuration of a base station (BTS) in a mobile network, comprising the steps of:
• Receiving network specifications in the form of NBX data,
• Processing the NBX data by a Cognitive Model Configurator (KMK) module,
• Generating manufacturer-specific SBX data by the KMK module using a trained artificial intelligence,
• Transmitting the SBX data via an SBI interface to the BTS for configuration and control.

12. The method according to claim 11, further comprising the step of transmitting configuration data from a Network Management System (NMS) or from multiple NMS systems to the RAN controller via a REST interface, where the RAN controller is configured to transform the transmitted configuration data into SBX data for the BTS.

13. The method according to any of claims 11 or 12, further comprising the step of the NMS operating or controlling the BTS by transmitting configurable operational data to the BTS via the RAN controller.

14. The method according to any of claims 11 to 13, further comprising the step of simultaneously configuring multiple BTS by the RAN controller, where each BTS is configured with specific SBX data generated by different artificial intelligences trained for the respective BTS.

15. The method according to claim 14, further comprising the step of storing a previous operational state of the BTS, allowing the configuration to be rolled back to a previous state if necessary.
